# FASCICULE DE BREVET EUROPEEN

(11) **EP 1 702 255 B1**
(45) Date de publication et mention de la délivrance du brevet: **02.07.2008**
(21) Numéro de dépôt: 04816542.7
(22) Date de dépôt: 14.12.2004
(51) Int. Cl.: G06F 3/00, B25J 13/02

(54) **INTERFACE MANUELLE COMPRENANT UN BLOC D'ACTIONNEMENT ET UN TRAIN DE SEGMENTS ARTICULES**
MANUELLE SCHNITTSTELLE MIT EINER BETÄTIGUNGSEINHEIT UND EINER FOLGE VON SCHWENKSEGMENTEN
MANUAL INTERFACE COMPRISING AN ACTUATING UNIT AND A TRAIN OF HINGED SEGMENTS

(30) Priorité: 15.12.2003 FR 0351056
(43) Date de publication de la demande: 20.09.2006
(73) Titulaire: COMMISSARIAT A L'ENERGIE ATOMIQUE, 75015 Paris (FR)
(72) Inventeur: GOSSELIN, Florian, F-92170 Vanves (FR); JOUAN-DE-KERVENOAEL, Tanguy, F-78640 Neauphle le Chateau (FR); DECHELLE, Christian, F-91380 Chilly-Mazarin (FR)
(74) Mandataire: Poulin, Gérard
(86) Numéro de dépôt international: PCT/FR2004/050688
(87) Numéro de publication internationale: WO 2005/059732

(56) Documents cités:
- FR-A- 2 832 345
- US-A- 5 587 937
- US-A- 5 912 658
- US-B1- 6 413 229
- A. FRISOLI, F. SIMONCINI, M. BERGAMASCO: "Mechanical Design of a Haptic Interface for the Hand" PROCEEDINGS OF DETC'02 - ASME 2002 DESIGN ENGINEERING TECHNICAL CONFERENCES AND COMPUTER AND INFORMATION IN ENGINEERING CONFERENCE, [Online] 29 septembre 2002 (2002-09-29), - 2 octobre 2002 (2002-10-02) XP002288977 MONTREAL, CANADA Extrait de l'Internet: URL:http://percro.sssup.it/~antony/papers/ detc02.pdf> [extrait le 2004-07-19]

## Description

Le sujet de cette invention est un bloc d'actionnement et un train de segments articulés inclus dans une interface manuelle.

Un bloc d'actionnement désigne ici un ensemble muni de moteurs et de transmissions menant aux segments articulés du train pour commander leurs déplacements ou au contraire, dans le cas de trains manipulés par un opérateur, pour leur opposer une force sensible qui rend la commande plus facile et plus agréable tout en mesurant les mouvements au moyen de codeurs associés. Dans tous ces cas, les moteurs ont généralement l'effet supplémentaire de maintenir le train de segments à une position de repos en opposant une résistance statique à la gravité.

L'application de cette invention concerne les interfaces manuelles portées au bras par un utilisateur et qui, selon le cas, obéissent à des mouvements de la main ou lui transmettent des mouvements ou d'autres signaux. Un exemple qu'on perfectionne ici est le document FR 2 849 937.

D'autres interfaces sont décrites dans l'article de Frisoli et al "Mechanical Design of a Haptic Interface for the Hand" dans les "Proceedings of DECT'02, ASME 2002 Design Engineering Technical Conferences and Computer and Information in Engineering Conference", à Montréal du 29 septembre au 2 octobre 2002 ; et dans le site http://intro.kz.tsukuba.ac.jp/vrlab web/wearablemaster/wearablemaster e.html (interface appelée "Wearable Master").

On doit souvent regretter que les blocs d'actionnement soient encombrants, lourds et peu maniables, et des états de collision entre le train des segments et les moteurs sont facilement susceptibles d'apparaître.

Un objet de l'invention est ainsi de fournir un bloc d'actionnement où ces inconvénients apparaissent moins.

Le bloc d'actionnement comprend une embase, un premier segment articulé à l'embase et un deuxième segment articulé au premier segment, deux moteurs et deux transmissions à câble associés respectivement à des mouvements de rotation des segments, les mouvements de rotation du premier segment étant pivotants, les moteurs étant montés sur l'embase et ayant une direction d'extension principale coïncidant avec une direction d'arbre de sortie, et les directions d'extension principale des deux moteurs sont parallèles au premier segment.

L'avantage atteint est que les moteurs sont disposés côte à côte sur l'embase ainsi que le premier segment, en formant un faisceau compact de pièces. L'invention peut être généralisée à des blocs plus complexes : l'un d'eux comprend un troisième segment articulé au deuxième segment, un troisième moteur monté sur l'embase, une troisième transmission entre le troisième moteur et le troisième segment, le troisième moteur ayant une direction d'extension principale coïncidant avec une direction d'arbre de sortie et qui est parallèle au premier segment.

Comme on l'a mentionné, l'application avantageuse de l'invention est une interface manuelle, qui comprend alors, outre un tel bloc d'actionnement, un moyen d'attache de l'embase à un membre antérieur d'un utilisateur (l'embase pouvant aussi être fixée ou posée sur une table), un train de segments articulés dont font partie les segments du bloc d'actionnement, et une extrémité du train de segments saisie par l'utilisateur.

Les caractéristiques mentionnées de l'invention ainsi que d'autres seront maintenant décrites plus en détail au moyen des figures suivantes :
- la figure 1 est une vue générale d'un fragment d'un bloc d'actionnement conforme à l'invention,
- la figure 1A représente un fragment de ce bloc en vue de dessus,
- la figure 2 est une vue d'une interface manuelle,
- la figure 3 est une vue d'une double interface manuelle portée par un opérateur,
- la figure 4 est une vue d'une prise de doigt à l'extrémité du train des segments,
- et la figure 4A est un détail de cette prise.

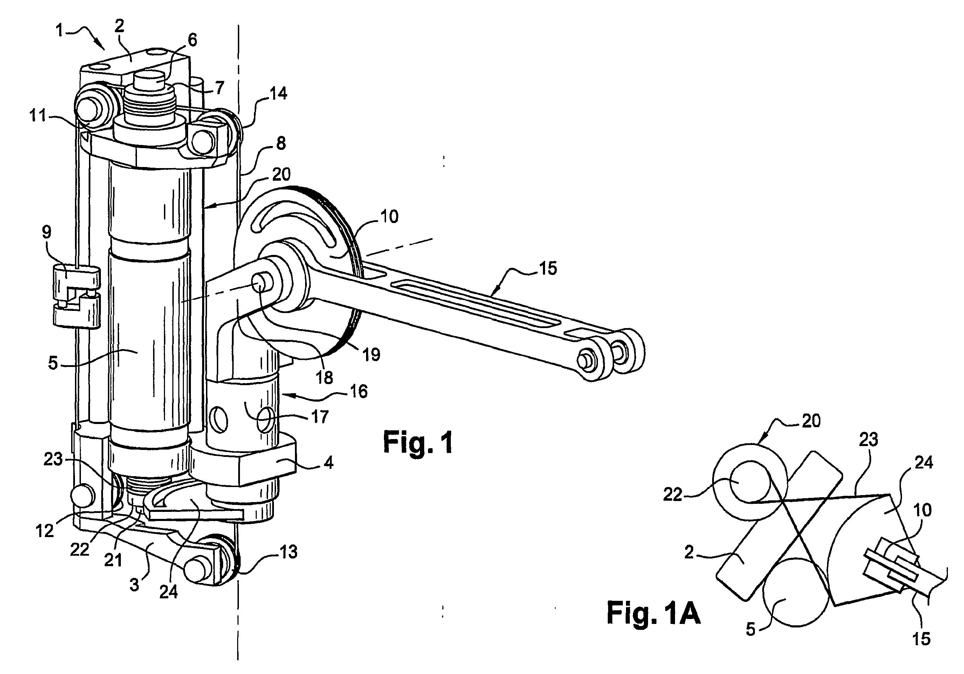

Se reportant à la figure 1, on voit que le bloc d'actionnement, partiellement représenté, comprend une embase 1 composée entre autres d'une plaque principale 2 et d'appendices 3 et 4, où un moteur 5 est monté sur la plaque principale 2 et comporte normalement un codeur des déplacements non représenté en détail. L'arbre moteur ou arbre de sortie porte la référence 6 et s'étend dans la direction verticale de la figure, qui est aussi la direction d'extension principale du moteur 5. L'arbre de sortie 6 entraîne une poulie motrice 7 et, par l'intermédiaire d'un câble 8 tendu par un ridoir 9, une poulie réceptrice 10 par l'intermédiaire de quatre poulies de renvoi 11, 12, 13 et 14 disposées de façon que la poulie motrice 7 est entre les poulies 11 et 14, et la poudre réceptrice 10 entre les poulies 13 et 14. Les poulies de renvoi 11 à 14 sont disposées suivant une disposition proche d'un rectangle, les poulies 11 et 12 étant alignées verticalement et les poulies 13 et 14 étant alignées ou légèrement décalées. De plus, la poulie réceptrice 10 est tangente au plan tangent aux poulies 13 et 14 de façon que le câble 8 ait deux brins libres rectilignes entre les poulies 13, 10 et 14 ; et la poulie motrice 7 est à hauteur des poulies de renvoi 11 et 14 entre lesquelles elle s'étend, et tangente à leur alignement, ce qui permet au câble 8 de former encore deux brins libres rectilignes entre la poulie motrice 7 et ces poulies de renvoi 11 et 14.

La poulie réceptrice 10 appartient à un deuxième segment 15 d'un train de segments dont on a aussi représenté le premier segment 16, qui est monté sur l'appendice 4 par un palier non représenté et qui comprend une portion creuse 17, à travers laquelle passe le câble 8, et une chape 18 de support d'un axe 19 auquel le deuxième segment 15 et sa poulie réceptrice 10 sont articulés. Les poulies de renvoi 12 et 13 sont montées sur l'appendice 3 de sorte que cette dernière vient au-dessous du premier segment 16. Le premier segment 16 est monté sur l'appendice 4 par une articulation pivotante, c'est-à-dire qu'il tourne autour de lui-même et plus précisément autour d'un axe vertical sensiblement parallèle aux longueurs libres du câble 8 entre les poulies de renvoi 13 et 14. Une particularité du montage est que, alors que les poulies de renvoi 11 à 14 et la poulie réceptrice 10 tournent autour d'axes horizontaux, celui de la poulie motrice 7, défini par l'arbre de sortie 6, est vertical, ce qui est rendu possible par la souplesse du câble 8 et permet de placer le moteur 5 parallèlement au premier segment 16 avec un encombrement limité en largeur malgré la présence de plusieurs poulies de renvoi. De plus, la disposition du câble 8, avec la longueur libre adjacente à la poulie réceptrice 10 qui passe à proximité de l'axe de rotation du premier segment 16, permet de découpler les mouvements des segments 16 et 15, puisqu'une rotation du premier segment 16 n'a pas, ou peu, d'influence sur le câble 8.

Un autre moteur 20 commande le premier segment 16. Il n'est que partiellement visible sur la figure 1 mais apparaît aussi à la figure 1A. Il est parallèle au moteur 5 associé au deuxième segment 15 est côte à côte avec lui. En particulier, il comporte aussi un arbre de sortie 21 vertical, sortant ici au bas du moteur. Cet arbre de sortie 21 comporte une poulie motrice 22 qui entraîne un câble 23 et fait tourner une poulie réceptrice 24 fixée au bas du premier segment 16 en face de la précédente. Aucune poulie de renvoi n'est ici nécessaire, les deux poulies étant d'axes parallèles et proches l'une de l'autre.

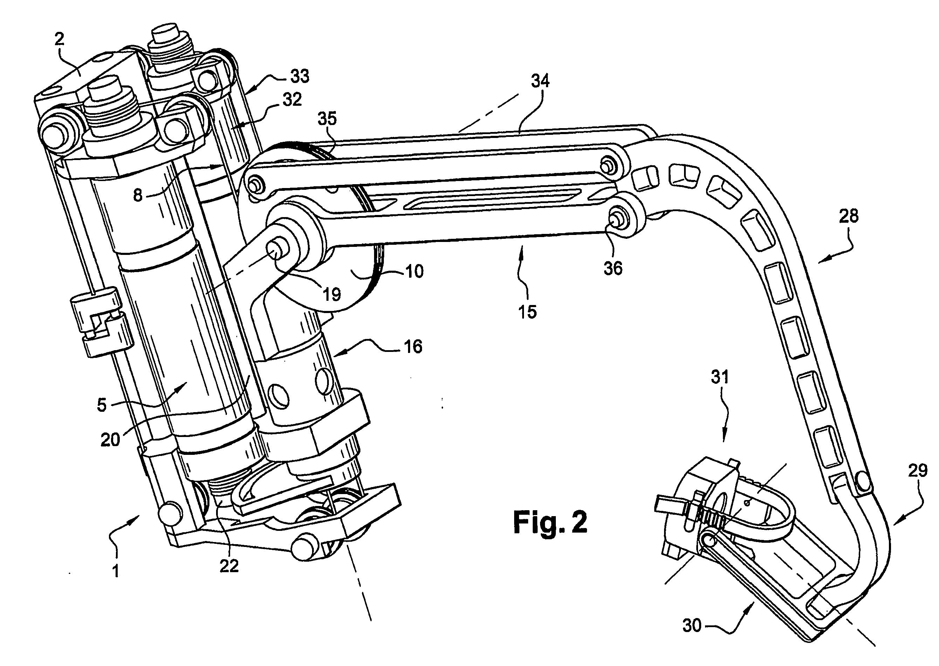

On aborde maintenant la description d'une interface manuelle au moyen de la figure 2. On reconnaît, outre l'embase 1, le premier segment 16 et le deuxième segment 15, un troisième segment 28, un quatrième segment 29, une chape 30 formant un cinquième segment et une prise de doigt 31 formant un sixième segment successivement articulés. L'embase 1 comprend les éléments rencontrés jusqu'à présent et en particulier les moteurs 5 et 20, et aussi un troisième moteur 32 équipé d'une transmission à câble 33 pour commander le troisième segment 28. Cela s'effectue au moyen de biellettes 34 articulées au troisième segment 28 en parallélogramme avec le deuxième segment 15, les biellettes 34 étant encore articulées à une poulie réceptrice 35 disposée côte à côte avec la poulie réceptrice 10, montée sur le même axe 19 mais aux mouvements indépendants. Le câble 33 est responsable de la rotation de la poulie réceptrice 35, et modifie ainsi l'inclinaison du troisième segment 28 sans bouger le câble 8. Le moteur 32 et le moteur 5 sont placés côte à côte sur la plaque principale 2 de l'embase 1, et sont à peu près semblables entre eux, ainsi que leurs transmissions : ainsi que le montre la figure 2, leurs arbres de sortie et leurs directions principales d'extension sont parallèles ; les systèmes à poulie motrice et poulies de renvoi sont aussi identiques et orientés de la même façon. Il faut simplement placer le câble 33 à une certaine distance de celui 8 du moteur 5, de sorte que les rotations du premier segment 16 exercent un petit effort sur le câble 33 et que le découplage des mouvements du troisième segment sera moins bien assuré. On peut placer aussi les deux câbles 8 et 33 de part et d'autre de l'axe de rotation du segment 16 pour améliorer le comportement de la transmission (33, 34, 35).

Les axes 19 et 36 du deuxième et du troisième segment 15 et 28 sont parallèles entre eux et perpendiculaires à celui du premier segment 16, ce qui permet de placer l'extrémité du troisième segment 28 en tout lieu d'un volume de travail du train. Les axes d'articulation des segments 29, 30 et 31 sont tous perpendiculaires entre eux ou du moins non parallèles, ce qui permet de placer le bout du train, c'est-à-dire la prise de doigt 31, à n'importe quelle orientation. On dispose ainsi d'un train de segments à six degrés de liberté sensiblement découplés puisque les mouvements de translation de la prise de doigt 31 sont accomplis pour l'essentiel par des mouvements des trois premiers segments 16, 15 et 28, et ses rotations par des mouvements des trois derniers segments 29, 30 et 31. Cette répartition des segments articulés est classique et l'invention ne porte donc pas sur elle. De même, les articulations des segments 29, 30 et 31 peuvent être classiquement munies de moteurs à retour d'effort qui les maintiennent à l'état voulu, et éventuellement de codeurs pour donner des indications de position.

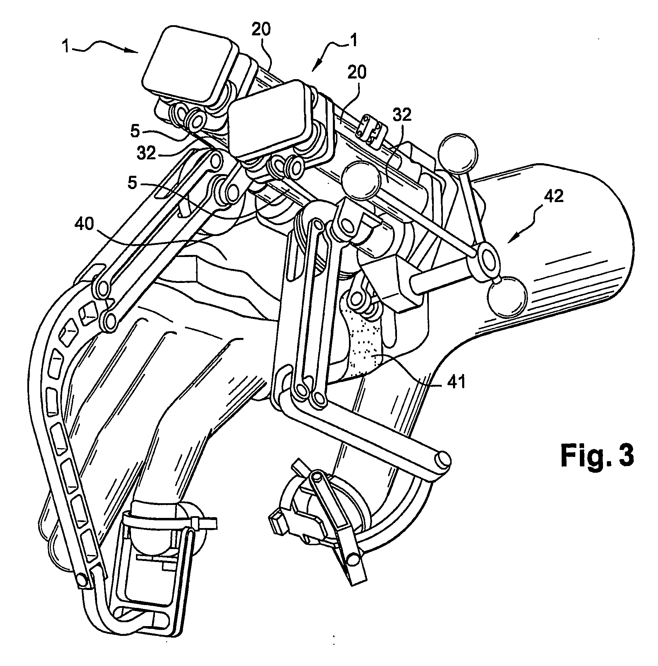

Une paire d'interfaces semblables du genre de la figure 2 est représentée dans un autre cas d'utilisation à la figure 3, où elles mènent respectivement au pouce et à l'index d'un utilisateur, qui sont engagés dans les prises de doigt 31. Les embases 1 sont montées sur un support commun 40 posé sur le dos de la main et retenu par une sangle 41 pressant la peau. On a représenté pour mémoire une cible 42, également montée sur le support commun 40 et qui est composée de trois boules formant un triangle irrégulier afin d'indiquer la position et l'orientation de la main dans l'espace à un dispositif de prise d'image non représenté en mesurant la forme et la dimension du triangle sur l'image, ce qui peut être utile dans certaines applications. Ce dispositif classique ne sera pas décrit davantage. Des interfaces semblables pourraient être associées ensemble pour tous les doigts de la main.

Les blocs d'actionnement sont placés côte à côte avec les moteurs couchés sur le dos de la main, les premiers segments 16 étant orientés vers le bout de la main et parallèles au dos de la main, les deuxièmes segments 15 s'étendant à peu près jusqu'au contour de la main et les troisièmes segments 28 s'étendant pardessus les doigts. On voit que cette interface manuelle est compacte et bien maniable, sa matière étant rassemblée à proximité immédiate de la main de l'opérateur, grâce à l'orientation des moteurs et au montage des premiers segments 16 sur l'embase avec une articulation pivotante.

Les articulations pivotantes entre les premiers segments et l'embase, grâce à laquelle les premiers segments occupent des positions immuables, permettent, en combinaison avec les transmissions souples à câble, de placer les moteurs associés aux segments suivants sur l'embase.

La commande des troisièmes segments 28 par les bielles 34 en parallélogramme avec les deuxièmes segments 15 assure un bon découplage des mouvements des segments en évitant, les renvois des câbles le long des segments, ce qui serait opposé à l'objet de l'invention.

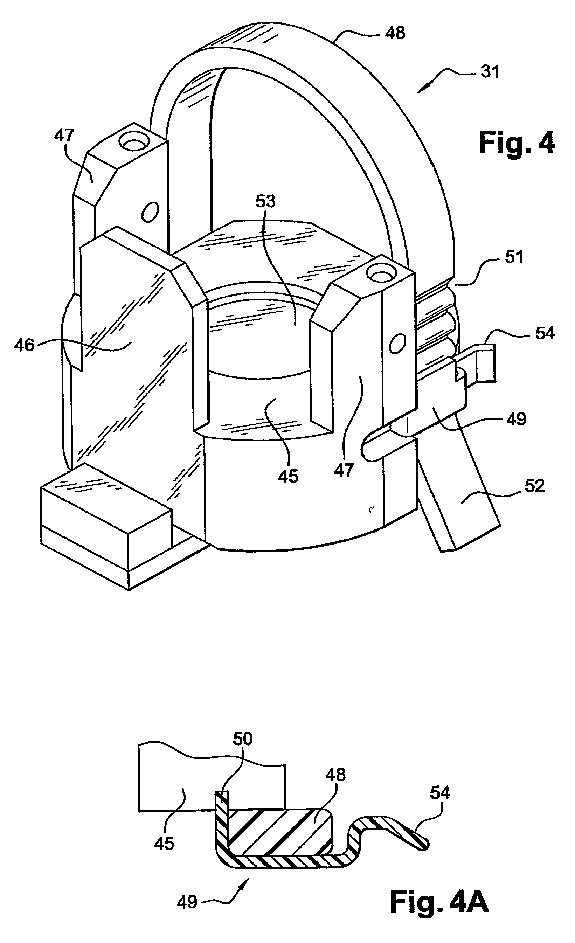

Les prises de doigt 31 seront décrites plus en détail au moyen de la figure 4. Elles comprennent un socle 45 sur lequel l'utilisateur pose la pulpe du doigt choisi, une butée 46 au bout du socle 45 pour régler l'avance du doigt, deux butées latérales 47 des deux côtés du socle 45, et une sangle 48, en forme d'arc et placée derrière les butées latérales 47 pour retenir le doigt sur le socle 45. La sangle 48 peut être en matière élastique. Elle est complétée par des crochets élastiques 49 métalliques ou plastiques qui enserrent ses extrémités et sont en outre munis d'une patte latérale 50 entrant dans une fente correspondante du socle 45 (figure 4A). De plus, la sangle 48 est munie de crans 51 et d'une patte de serrage 52 tout au bout des deux côtés. L'ouverture de la sangle 48 et la libération du doigt sont commandées en écartant les crochets 49 en l'écartant à leur extrémité 54. Quand les extrémités 54 sont relâchées, la sangle 48 est plaquée contre le socle 45 et reste en place. En tirant sur les pattes de serrage 52, on fait sauter des crans aux crochets 49 et on resserre la sangle 48 sur l'ongle du doigt.

Une autre possibilité offerte par l'invention consiste à disposer un actionneur tactile 53 dans le socle 45, c'est-à-dire un engin capable de transmettre une vibration au doigt, et un renseignement correspondant à son possesseur, dans certaines conditions qui dépendent de l'application de l'interface, parmi lesquelles on peut citer la simulation, l'apprentissage, ou les jeux.

## Revendications

1. Interface manuelle comportant un bloc d'actionnement comprenant une embase (1), un premier segment (16) articulé à l'embase et un deuxième segment (15) articulé au premier segment, deux moteurs (20, 5) et deux transmissions à câble (7 à 14, 22 à 24) associés respectivement à des mouvements de rotation des segments, les mouvements de rotation du premier segment (16) étant pivotants, les moteurs étant montés sur l'embase (1) et ayant une direction d'extension principale coïncidant avec une direction d'un arbre de sortie (21, 6); ainsi qu'un moyen d'attache de l'embase, un train de segments articulés (16, 15, 28 à 31) dont font partie les segments du bloc d'actionnement, et une extrémité du train de segments saisie par l'utilisateur, **caractérisé en ce que** les directions d'extension principale des deux moteurs sont parallèles au premier segment (16).

2. Interface manuelle selon la revendication 1, **caractérisée en ce que** l'extrémité (31) comprend un socle (45) de pose d'une pulpe d'un doigt de l'utilisateur, une butée (46) de bout du doigt, et une sangle (48) serrant l'ongle du doigt.

3. Interface nouvelle selon la revendication 2, **caractérisée en ce que** le socle comprend un actionneur tactile (53).

4. Interface manuelle selon l'une quelconque des revendications 1 à 3, **caractérisée en ce que** le train des segments comprend six degrés de liberté.

5. Interface manuelle selon l'une quelconque des revendications 1 à 4, **caractérisée en ce que** le bloc d'actionnement comprend un troisième segment (28) articulé au deuxième segment (15) un troisième moteur (32) monté sur l'embase, une troisième transmission (33, 35, 34) entre le troisième moteur et le troisième segment, le troisième moteur ayant une direction d'extension principale coïncidant avec une direction d'arbre de sortie et qui est parallèle au premier segment.

## Claims

1. Manual interface including an actuation block comprising a base (1), a first segment (16) articulated to the base and a second segment (15) articulated to the first segment, two motors (20, 5) and two cable transmissions (7 to 14, 22 to 24) each associated with rotation movements of the segments, the rotation movements of the first segment (16) being pivoting, the motors being installed on the base (1) and having a main extension direction coinciding with the direction of an output shaft (21, 6), and a means of fastening the base, a train of articulated segments (16, 15, 28 to 31) including the segments of the actuation block and one end of the train of segments gripped by the user, **characterised in that** the main extension directions of the two motors are parallel to the first segment (16).

2. Manual interface according to claim 1, **characterised in that** the end (31) includes a base (45) for placing the digital pulp of a user's finger, a stop (46) for the end of the finger, and a strap (48) clamping the finger nail.

3. Manual interface according to claim 2, **characterised in that** the base comprises a touch sensitive actuator (53).

4. Manual interface according to any one of claims 1 to 3, **characterised in that** the train of segments comprises six degrees of freedom.

5. Manual interface according to any one of claims 1 to 4, **characterised in that** the actuation block comprises a third segment (28) articulated to the second segment (15), a third motor (32) being mounted on the base, a third transmission (33, 35, 34) between the third motor and the third segment, the third motor having a main extension direction coinciding with the direction of an output shaft parallel to the first segment.

## Patentansprüche

1. Manuelle Schnittstelle, eine Betätigungseinheit umfassend, mit einem Basisblock (1), einem ersten Segment (16), angelenkt an den Basisblock, einem zweiten Segment (15), angelenkt an das erste Segment, zwei Motoren (20, 5) und zwei Kabeltransmissionen (7 bis 14, 22 bis 24), jeweils verbunden mit Drehbewegungen der Segmente, wobei die Drehbewegungen des ersten Segments (16) schwenkend sind, die Motoren auf den Basisblock (1) montiert sind und eine Hauptausdehnungsrichtung haben, die mit einer Richtung einer Abtriebswelle (21, 6) zusammenfällt; sowie mit einer Befestigungseinrichtung des Basisblocks, einem Zug gelenkiger Segmente (16, 15, 28 bis 31), zu dem die Segmente der Betätigungseinheit gehören, und einem dem Benutzer als Griff dienenden Ende des Segmentzugs,
**dadurch gekennzeichnet, dass** die Hauptausdehnungsrichtungen der beiden Motoren parallel zu dem ersten Segment 16 sind.

2. Manuelle Schnittstelle nach Anspruch 1, **dadurch gekennzeichnet, dass** das Ende (31) einen einer Fingerbeere des Benutzers als Auflage dienenden Sockel (45), einen Anschlag (46) für das Ende des Fingers und einen Gurt (48) zum Festspannen des Fingernagels umfasst.

3. Neue Schnittstelle nach Anspruch 2, **dadurch gekennzeichnet, dass** der Sockel einen taktilen Aktor (53) umfasst.

4. Manuelle Schnittstelle nach einem der Ansprüche 1 bis 3, **dadurch gekennzeichnet, dass** der Segmentzug sechs Freiheitsgrade hat.

5. Manuelle Schnittstelle nach einem der Ansprüche 1 bis 4, **dadurch gekennzeichnet, dass** die Betätigungseinheit ein drittes Segment (28), angelenkt an das zweite Segment (15), einen auf den Basisblock montierten dritten Motor (32) und eine dritte Transmission (33, 35, 34) zwischen dem dritten Motor und dem dritten Segment umfasst, wobei der dritte Motor eine Hauptausdehnungsrichtung hat, die mit einer Abtriebswellenrichtung zusammenfällt und die zu dem ersten Segment parallel ist.
